# EUROPEAN PATENT SPECIFICATION

(11) **EP 4 517 062 B1**
(45) Date of publication and mention of the grant of the patent: **18.11.2026**
(21) Application number: 24197851.9
(22) Date of filing: 02.09.2024
(51) Int. Cl.: F01P 3/22, F01P 3/20, B60K 11/02, F01P 7/16, F01P 11/14, B60K 1/00

(54) **SYSTEM FOR A VEHICLE AND VEHICLE COMPRISING THE SAME**
SYSTEM FÜR EIN FAHRZEUG UND FAHRZEUG MIT DIESEM SYSTEM
SYSTÈME POUR UN VÉHICULE ET VÉHICULE COMPRENANT CE SYSTÈME

(30) Priority: 04.09.2023 IT 202300018093
(43) Date of publication of application: 05.03.2025
(60) Divisional application: 26211911.8
(73) Proprietor: FERRARI S.p.A., 41100 Modena (IT)
(72) Inventor: BALLATORE, Marco, 41100 MODENA (IT); PEDERZOLI, Federico, 41100 MODENA (IT); CASTELLINI, Paolo, 41100 MODENA (IT)
(74) Representative: Studio Torta S.p.A.

(56) References cited:
- EP-A1- 2 133 534
- FR-A1- 2 997 449
- US-A1- 2013 333 641

## Description

### TECHNICAL FIELD

The invention concerns a biphasic heat exchanging system for a vehicle. The invention also concerns a vehicle comprising the heat exchanging system.

### BACKGROUND

Biphasic heat exchanging systems are known, comprising:
- a circuit, inside of which a cooling fluid flows;
- a component to be cooled, which is adapted to release heat to the cooling fluid that flows in the circuit; and
- a pump adapted to circulate the cooling fluid inside the circuit.

Specifically, during the cooling of the component, the heat absorbed by the cooling fluid determines its passage from the liquid state to a biphasic liquid/vapour state.

Known biphasic heat exchanging systems also comprise a heat exchanger located downstream of the component to be cooled according to the flow direction of the cooling fluid inside the circuit. This heat exchanger is adapted to remove heat from the cooling fluid and return it to the liquid state.

In the known systems, in order for the cooling fluid to effectively cool the component, it is useful for the vapour quality of the cooling fluid in the biphasic state to range between 0.3 and 0.6. In fact, with a vapour quality greater than 0.6, the bubbles of vapour dispersed in the liquid phase of the cooling fluid are so numerous and/or so big as to alter the local condition of thermal exchange between the fluid and the surface while no longer ensuring a layer of liquid on the wall. The presence of a layer of liquid on the wall is, in fact, a necessary condition for ensuring a heat exchange that exploits the latent heat of evaporation.

In known biphasic heat exchanging systems, the value of the flow rate of cooling fluid made to circulate by the pump is defined in the design phase and/or set using experimental calibration, in the attempt to ensure effective cooling of the component.

However, in the event of anomalies or losses of cooling fluid from the circuit, the defined fluid flow rate may not be suitable for ensuring the cooling of the component. As a result, it is possible to observe that known heat exchanging systems are not always characterized by satisfactory reliability, since they expose the component to be cooled to significant risks of damage and breakdowns.

In light of the above, there is a need to increase the reliability of known biphasic heat exchanging systems. In particular, there is a need to obtain a heat exchanging system in which the quality of the heat exchange can be controlled efficiently.

FR2997449A1 discloses a system having an exchanger in which a liquid coolant i.e. glycol water, is circulated. An accelerometer is placed adjacent to the exchanger so as to measure vibrations of the exchanger for detecting bursting of vapor bubbles of the coolant at a coolant boiling point. The accelerometer has a piezoelectric sensor and a strain gauge and is placed on a liquid coolant outlet of the exchanger. The accelerometer is placed on a casing of the exchanger that is formed as a plate heat exchanger. The accelerometer is connected to a control unit of a coolant circulating pump.

US2013333641A1 discloses a device characterized in that when the passing of coolant in an internal combustion engine is restricted to accelerate the warm-up of the internal combustion engine and the coolant in this engine is undergoing nucleate boiling, the restriction of the passing of the coolant in the internal engine is maintained. Specifically, the restriction of the passing of the coolant in the internal combustion engine is maintained during nucleate boiling from the beginning of nucleate boiling of the coolant in the internal combustion engine until the maintenance period has elapsed. Thus, the warm-up of the internal combustion engine is effectively accelerated by restricting the passing of the coolant in the engine. Furthermore, the restriction of the passing of the coolant in the internal combustion engine is cancelled when the maintenance period has elapsed. Thus, low-temperature coolant flows in the internal combustion engine and the internal combustion engine is cooled by this coolant, so nucleate boiling of the coolant in the engine is suppressed.

EP2133534A1 discloses a cooling system for a liquid cooled internal combustion engine having coolant passages and a heat exchanger selected to operate the engine cooling system in the region of nucleate boiling. A sensor detects the presence of nucleate boiling and a pump and pressure relief valve responsive to the sensor maintains the coolant system pressure at a level maintaining optimum nucleate boiling to increase heat flux from the engine and reduce overall size of the system.

Similar considerations also apply to known lubricating systems (or lubricating-cooling) systems, the efficacy of which is negatively influenced by the presence of free air in the form of bubbles in the lubricating (or lubricating-cooling) fluid. In fact, the free air dispersed makes the lubricating fluid locally compressible and, as a result, causes a reduction in its lubricating and/or cooling effect, increasing the risk of wear in the components to be lubricated.

In known lubrication systems too, the value of the flow rate of lubricating fluid circulated by the pump is established in the design phase. Precisely for this reason, this value is not always suitable for ensuring sufficient lubrication, especially if there is free air in the lubricating fluid.

Therefore, there is also a need to increase the reliability and robustness of known lubrication systems.

One purpose of this invention is to satisfy at least one of the needs described above, preferably in a simple and cost-effective way.

### DESCRIPTION OF THE INVENTION

The purpose is achieved with a system as defined in claim 1. The dependent claims define particular embodiments of the invention.

### BRIEF DESCRIPTION OF THE DRAWINGS

Below, six embodiments of the invention are described to better understand it by way of non-limiting example and with reference to the attached drawings in which:
- Figure 1 is a schematic representation of a vehicle with parts removed for clarity comprising a system equipped with a device for determining the vapour quality according to a first embodiment of this invention;
- Figures 2 and 3 are detailed schematic representations of a device for determining the vapour quality, being not part of the invention, in Figure 1 in respective different operating conditions;
- Figure 4 is an exemplifying graph that shows the amplitude, over time, of a signal generated by a component of the device for determining the vapour quality in the operating condition in Figure 2;
- Figure 5 is an exemplifying graph that shows the amplitude, over time, of a signal generated by a component of the device for determining the vapour quality in the operating condition in Figure 3;
- Figures 6 and 7 are schematic representations of a device for determining the vapour quality according to an example being not part of the invention in respective different operating conditions;
- Figures 8 and 9 are detailed schematic representations of a device for determining the vapour quality according to the invention in respective different operating conditions;
- Figures 10 and 11 are schematic detailed representations of a device for determining the vapour quality according to a further example being not part of the invention in respective different operating conditions;
- Figures 12 and 13 are schematic representations of a device for determining the vapour quality according to a further example being not part of the invention in respective different operating conditions; and
- Figure 14 is a schematic representation of a vehicle with parts removed for clarity comprising a system according to a sixth embodiment, which is not part of this invention and is shown for illustrative purposes only.

### EMBODIMENTS OF THE INVENTION

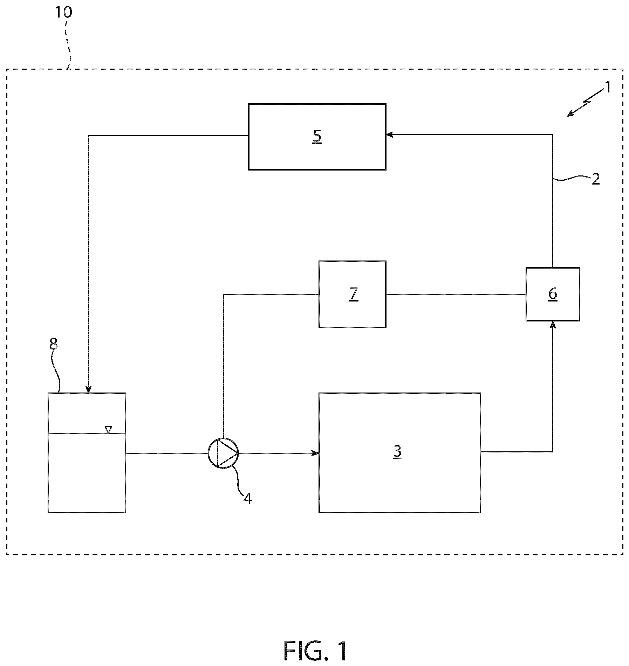

In Figure 1, the reference number 10 is used to indicate, as a whole, a motor vehicle comprising a system 1 and a component 3. Specifically, the component 3 is a component to be cooled and the system 1 is a heat exchanging system adapted to cool the component 3.

The heat exchanging system 1 comprises:
- a circuit 2 adapted to be crossed by a cooling fluid;
- the component 3, which is adapted to release heat to the cooling fluid;
- a pump 4 adapted to circulate the cooling fluid inside the circuit 2; and
- a heat exchanger 5 adapted to remove heat from the cooling fluid.

Specifically, the cooling fluid is adapted to pass from a liquid state to a biphasic liquid/vapour state during cooling of the component 3.

Preferably but not necessarily, the cooling fluid is water or a mixture of water and glycol.

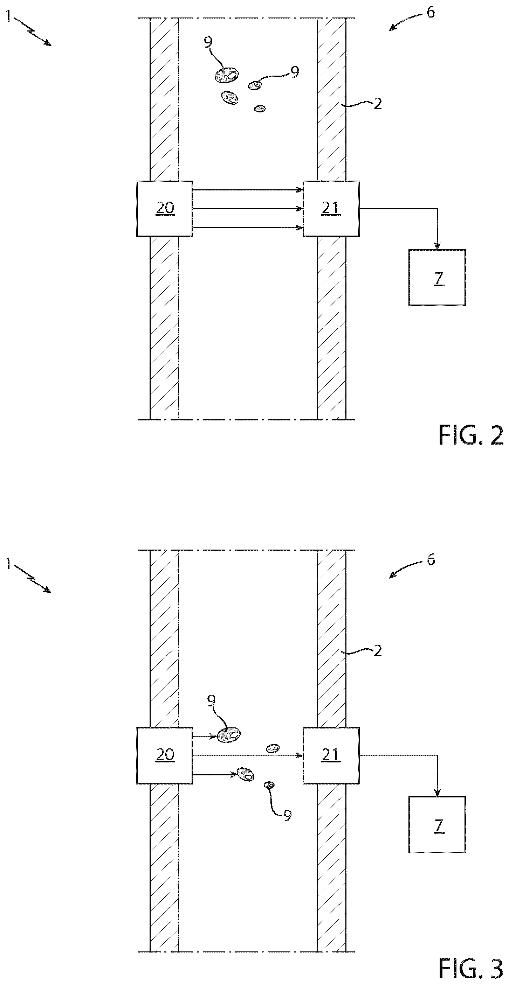

More specifically, when the cooling fluid is in the biphasic state, it comprises multiple vapour bubbles 9 dispersed in the liquid phase (some of which are schematically represented in Figures 2 and 3). The number and size of the vapour bubbles 9 are related to the vapour quality. Moreover, the vapour bubbles 9 could have different shapes.

The component 3 to be cooled is, for example, a thermal engine or electric motor or a battery of the motor vehicle 10.

The heat exchanger 5 is arranged downstream of the component 3 according to the flow direction of the cooling fluid in the circuit 2. In particular, the heat exchanger 5 is a condenser adapted to return the cooling fluid from the biphasic state to the liquid state.

In the embodiment illustrated, the heat exchanging system 1 also comprises a tank 8 adapted to contain the cooling fluid and fluidically connected to the circuit 2.

Advantageously, the heat exchanging system 1 comprises a device 6 for determining the vapour quality x of the cooling fluid and an electronic control unit 7 operationally connected to the device 6 and to the pump 4; the electronic control unit 7 is configured to control the pump 4 as a function of the vapour quality x detected and/or determined by the device 6.

Specifically, the electronic control unit 7 is configured to increase the flow rate of the cooling fluid delivered by the pump 4 inside the circuit 2, when the vapour quality x determined by the device 6 is greater than a threshold value xmax. Alternatively or additionally, the electronic control unit 7 is configured to decrease the flow rate of the cooling fluid delivered by the pump 4, when the vapour quality x determined by the device 6 is less than a threshold value xmin. The threshold value xmin, in particular, is less than the threshold value xmax.

More specifically, the electronic control unit 7 comprises a memory - known and not illustrated - adapted to store the numeric or percentage values of the threshold values xmin and xmax. By way of example, xmin is 0.3 and xmax is 0.6.

In the embodiment illustrated, the device 6 is located downstream of the component 3 to be cooled according to flow direction of the cooling fluid inside the circuit 2. Specifically, the device 6 is fluidically interposed between the component 3 to be cooled and the heat exchanger 5.

As illustrated in Figures 2 and 3, the device 6 being not part of the invention comprises an ultrasound emitter 20 and an ultrasound receiver 21, between which there is a section of the circuit 2, specifically a section of a pipe of the circuit 2.

The ultrasound emitter 20 is adapted to emit a first ultrasonic signal and the ultrasound receiver 21 is adapted to generate a second signal associated with the ultrasounds received following the emission of the first ultrasonic signal. Specifically, the ultrasound emitter 20 is adapted to emit the first ultrasonic signal so that this is transmitted to the ultrasound receiver 21 through the lumen of the section of the circuit 2, and, as a result, through the flow of cooling fluid that flows inside.

Preferably but not necessarily, the ultrasound emitter 20 directly faces the lumen of the section of the circuit 2, so that the first ultrasonic signal is emitted in the lumen of the pipe section of the circuit 2 in the absence of elements interposed between the ultrasound emitter 20 and the lumen. Similarly, the ultrasound receiver 21 is preferably directly facing the lumen of the pipe section of the circuit 2, so that, between the ultrasound emitter 20 and the ultrasound receiver 21, there is only the flow of cooling fluid.

More specifically, the ultrasound emitter 20 and the ultrasound receiver 21 are at least partially aligned along a direction transversal - specifically, orthogonal - to the flow direction of the cooling fluid passing through the section of the circuit 2.

For example, the second signal is a voltage that is variable over time and having an amplitude proportional to the quantity of ultrasounds received by the ultrasound receiver 21 over time.

The second signal is related to the amplitude over time of the first ultrasonic signal, as a function of the attenuation that the latter undergoes during propagation through the lumen of the pipe of the circuit 2. In detail, the attenuation that the first ultrasonic signal undergoes when crossing the lumen of the pipe is less when the cooling fluid that passes through the pipe is in the liquid state (Figure 2) than when the cooling fluid is in the biphasic condition (Figure 3).

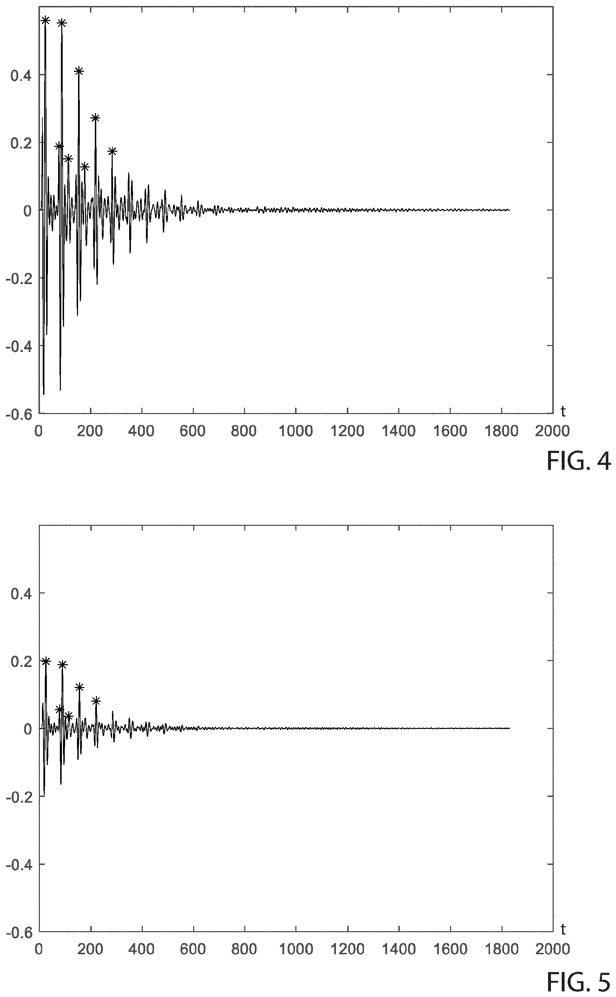

Specifically, Figure 4 is a representative example of the amplitude of the second signal over time when the cooling fluid that passes through the pipe is in the liquid state; Figure 5 is a representative example of the amplitude of the second signal over time when the cooling fluid that passes through the pipe is in the biphasic condition.

The electronic control unit 7 is configured to determine the vapour quality x of the cooling fluid based on the second signal.

Specifically, the electronic control unit 7 is configured to calculate the vapour quality x based on one or more statistical parameters detected based on the second signal, for example, peak-peak differences, standard deviation, and/or average value.

More specifically, the electronic control unit 7 is configured to store a value or range of values that the statistical parameters assume when the cooling fluid that passes through the pipe is in the liquid state (vapour quality x=0) and to compare the value of the statistical parameters detected based on the second signal with the stored values. The electronic control unit 7 is also configured to determine and/or calculate the value of the vapour quality x of the cooling fluid as a function of the difference between the stored values of the statistical parameters and the values detected based on the second signal.

In general, greater attenuations of the first ultrasonic signal and, as a result, higher vapour qualities x correspond with greater differences between the value detected and the value stored of the statistical parameters.

Preferably, the stored values of statistical parameters associated with the situation in which the cooling fluid is in the liquid state or is in biphasic conditions are determined experimentally or in a calibration phase of the heat exchanging system 1.

The operation of the heat exchanging system 1 is described below.

In use, the pump 4 circulates the cooling fluid inside the circuit 2 in order to cool the component 3. Specifically, when crossing the component 3, the cooling fluid passes from the liquid state to the biphasic state and, as a result, its vapour quality x increases.

The device 6 periodically determines the vapour quality x of the cooling fluid and the electronic control unit 7 compares the vapour quality x with the threshold value xmin and with the threshold value xmax.

Specifically, the ultrasound emitter 20 periodically emits the first ultrasonic signal, so that this propagates through the lumen of the pipe in the circuit 2 where the ultrasound emitter 20 is arranged. The ultrasound receiver 21 receives the ultrasounds emitted by the ultrasound emitter 20 and sends the corresponding second signal to the electronic control unit 7.

More specifically, when the cooling fluid is in the liquid state, the first ultrasonic signal propagates essentially undisturbed through the liquid (Figure 2); when the cooling fluid is in the biphasic state, the first ultrasonic signal is at least partially intercepted by the vapour bubbles dispersed in the liquid phase (Figure 3) and this causes a greater attenuation thereof.

The electronic control unit 7 analyses the second signal and determines the statistical parameters. Subsequently, the electronic control unit 7 compares the stored values of the statistical parameters with the values determined by the analysis of the second signal and determines and/or calculates, as a result, the vapour quality x in the section of the circuit 2 at which the device 6 is arranged.

If the vapour quality x determined is greater than the threshold value xmax, the electronic control unit 7 determines an increase of the flow rate of the cooling fluid delivered by the pump 4, with the aim of ensuring a suitable flow of heat between the component 3 and the cooling fluid. If the vapour quality x determined is less than the threshold value, the electronic control unit 7 decreases the flow rate of the cooling fluid delivered by the pump 4.

As a result of the cooling of the component 3, the cooling fluid reaches the heat exchanger 5, where it is returned to the liquid state. Subsequently, the cooling fluid accumulates in the tank 8.

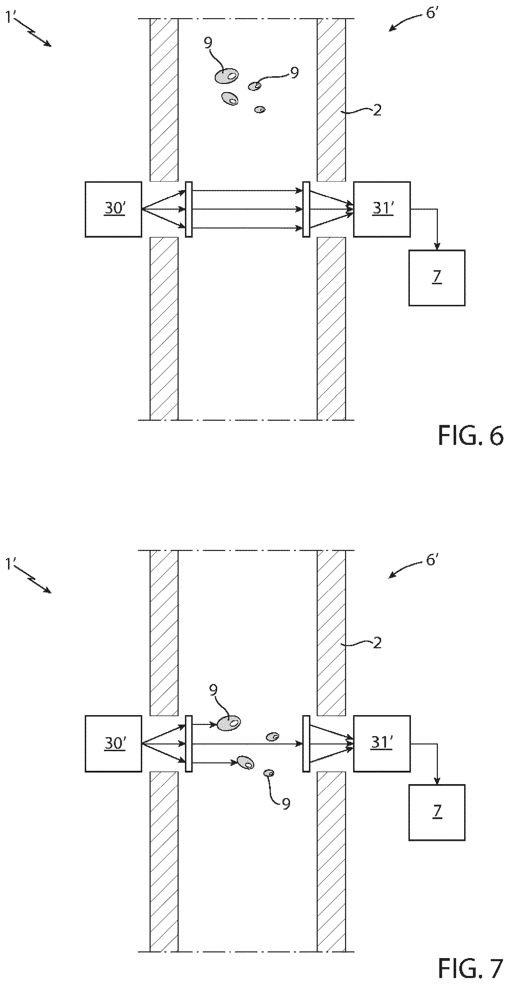

With reference to Figures 6 and 7, reference number 1' indicates a system according to an example being not part of the invention. The system 1' is a heat exchanging system similar to the first heat exchanging system 1 and will be described below only as far as it differs from the latter; the same or equivalent parts of the heat exchanging systems 1, 1' will be denoted, where possible, by the same reference numbers.

The heat exchanging system 1' differs from the first heat exchanging system 1 in that it comprises a device 6' in place of the device 6.

As illustrated in Figures 6 and 7, the device 6' comprises a light emitter 30' and a light receiver 31', between which a section of the circuit 2 is interposed.

The light emitter 30' is adapted to emit a third luminous signal and the light receiver 31' is adapted to generate a fourth signal associated with the light received following the emission of the third luminous signal. Specifically, the light emitter 30' is adapted to emit the third luminous signal so that this is transmitted to the light receiver 31' through the lumen of the pipe section of the circuit 2, and, as a result, through the flow of cooling fluid that flows inside.

The light emitter 30' preferably directly faces the lumen of the pipe section of the circuit 2, so that the third luminous signal is emitted in the lumen of the pipe section of the circuit 2 in the absence of elements interposed between the light emitter 30' and the lumen. Similarly, the light receiver 31' preferably directly faces the lumen of the pipe section of the circuit 2, so that, between the light emitter 30' and the light receiver 31', there is only the flow of cooling fluid.

More specifically, the light emitter 30' and the light receiver 31' are at least partially aligned along a direction transversal - specifically, orthogonal - to the flow direction of the cooling fluid.

For example, the fourth signal is a voltage that is variable over time and having an amplitude proportional to the quantity of light received and/or captured by the light receiver 31' over time. The fourth signal is related to the amplitude over time of the third luminous signal, as a function of the attenuation that the latter undergoes during propagation through the lumen of the pipe of the circuit 2. In detail, the attenuation that the third luminous signal undergoes when crossing the lumen of the pipe is greater when the cooling fluid that passes through the pipe is in the liquid state (Figure 6) than when the cooling fluid is in the biphasic condition (Figure 7).

The electronic control unit 7 is configured to determine the vapour quality x of the cooling fluid based on the fourth signal.

Specifically, the electronic control unit 7 is configured to calculate the vapour quality x based on one or more statistical parameters detected based on the fourth signal, for example, peak-peak distances, standard deviation, and/or average value.

More specifically, the electronic control unit 7 is configured to store a value or range of values that the statistical parameters assume when the cooling fluid that passes through the pipe is in the liquid state and to compare the value of the statistical parameters detected based on the fourth signal with the stored values. The electronic control unit 7 is also configured to calculate the vapour quality x of the cooling fluid as a function of the difference between the stored values of statistical parameters and the values detected based on the second signal.

In general, a greater difference between the value detected and the value stored of the statistical parameters implies a greater attenuation of the third luminous signal and, as a result, a greater vapour quality x.

The light emitter 30' preferably comprises a laser and the light receiver 31' comprises a photodiode. Specifically, the light emitter 30' is adapted to emit a laser beam oriented towards the light receiver 31'. In addition, the fourth signal is a voltage that is variable over time and having an amplitude proportional to the quantity of coherent light received and/or captured by the photodiode.

In addition, the laser beam preferably propagates along a plane transversal to the flow direction of the cooling fluid.

For the sake of completeness, it should be noted that the example trends illustrated in Figures 4 and 5 with reference to the second signal are essentially applicable to the fourth signal too.

The operation of the heat exchanging system 1' is similar to the operation of the heat exchanging system 1 and is described below only as far as it differs from the latter.

In use, the device 6 ' periodically determines the vapour quality x of the cooling fluid and the electronic control unit 7 compares the vapour quality x with the threshold values xmin and xmax.

Specifically, the light emitter 30' periodically emits the third luminous signal, so that this propagates through the lumen of the pipe in the circuit 2 where the light emitter 30' is arranged. The light receiver 31' receives the light radiation from the light emitter 30' and sends the corresponding fourth signal to the electronic control unit 7.

The electronic control unit 7 analyses the fourth signal and determines the statistical parameters. Subsequently, the electronic control unit 7 compares the stored values of the statistical parameters with the values determined by the analysis of the fourth signal and determines and/or calculates, as a result, the vapour quality x.

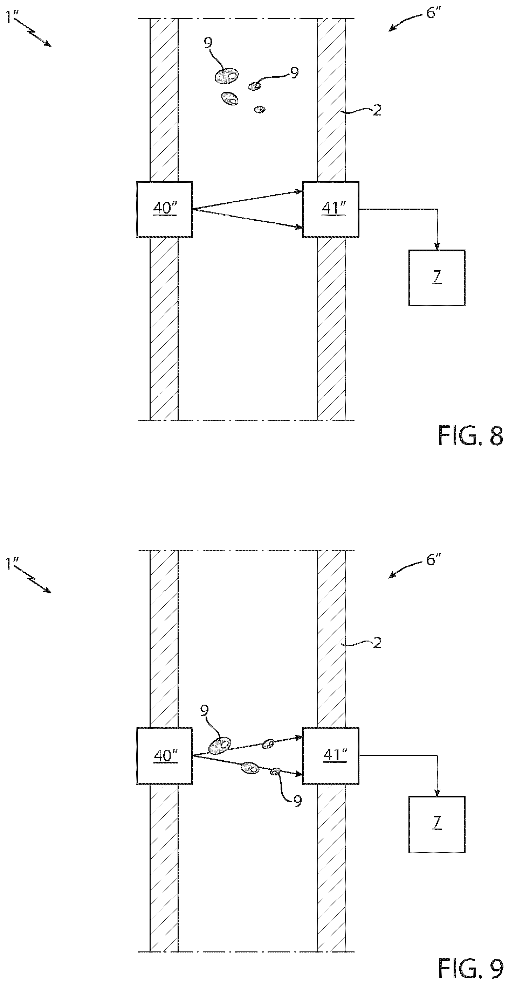

With reference to Figures 8 and 9, reference number 1" indicates a system according to a third embodiment of this invention. The system 1" is a heat exchanging system similar to the first heat exchanging system 1 and will be described below only as far as it differs from the latter; the same or equivalent parts of the heat exchanging systems 1, 1' will be distinguished, where possible, by the same reference numbers.

The heat exchanging system 1" differs from the first heat exchanging system 1 by comprising a device 6" in place of the device 6.

As illustrated in Figures 8 and 9, according to the invention, the device 6" comprises a light emitter 40" and an image acquisition device 41'', between which a section of the circuit 2 is interposed.

The image acquisition device 41'' comprises, for example, a video camera and/or camera. The light emitter 40" comprises a lamp, for example an LED lamp.

The light emitter 40" is adapted to emit a light beam at the lumen of the pipe section of the circuit 2 and the image acquisition device 41" is adapted to capture images of at least part of the section of the circuit 2 illuminated by the light beam. Specifically, the image acquisition device 41" is adapted to acquire images of the section of the circuit 2, in order to detect any vapour bubbles 9 dispersed in the liquid phase.

The light emitter 40'' preferably directly faces the lumen of the pipe section of the circuit 2, so that the light beam is emitted in the lumen of the pipe section of the circuit 2 in the absence of elements interposed between the light emitter 40'' and the lumen. Similarly, the image acquisition device 41'' preferably directly faces the lumen of the pipe section of the circuit 2, so that, between the light emitter 40'' and the light receiver 41'', there is only the flow of cooling fluid.

More specifically, the light emitter 40" and the image acquisition device 41" are at least partially aligned along a direction transversal - specifically, orthogonal - to the flow direction of the cooling fluid.

The electronic control unit 7 is configured to determine and/or calculate the vapour quality x of the cooling fluid based on the images acquired by the image acquisition device 41", for example by analysing the area of the surface engaged by the bubbles on the section of pipe acquired, through thresholding and weighing of the image in greyscale.

For example, the electronic control unit 7 is configured to determine the vapour quality x of the cooling fluid using image processing algorithms or alternative ones based on the application of neural networks, in particular by cross-correlation of images by interrogation area processed in relation to known reference data collected during calibration.

Specifically, the electronic control unit 7 is configured to calculate at successive time intervals the number of bubbles 9 and/or their size based on the images acquired by the image acquisition device 41" and to calculate the vapour quality x based on the number of bubbles 9 detected, based on their size and/or product of the number of bubbles 9 by their size.

More specifically, the "size" of the bubbles 9 means, for example, the area occupied by each of the bubbles 9 within the flow of cooling fluid in the plane of the images acquired by the image acquisition device 41".

The electronic control unit 7 is also configured to store a value or a range of values that the number of bubbles 9 and/or area occupied by the bubbles 9 in the section of circuit 2 observed by the image acquisition device 41" assume when the cooling fluid that passes through the pipe is in the liquid state and to compare the values detected of the number of bubbles 9 and/or the area occupied by the bubbles 9 based on the images acquired with the stored values. The electronic control unit 7 is also configured to calculate the vapour quality x of the cooling fluid as a function of the difference between the stored values of the number of bubbles 9 and/or the area occupied by the bubbles 9 and the values detected based on the images acquired.

In general, a greater vapour quality x corresponds to a greater number of bubbles 9 and/or greater area occupied by the bubbles 9.

The operation of the heat exchanging system 1" is similar to the operation of the first heat exchanging system 1 and is described below only as far as it differs from the latter.

In use, the device 6'' periodically determines the vapour quality x of the cooling fluid and the electronic control unit 7 compares the vapour quality x with the threshold values xmin and xmax.

Specifically, the light emitter 40" emits a light beam at the lumen of the pipe section of the circuit 2 and the image acquisition device 41'' acquires images of at least part of the section of the circuit 2 illuminated by the light beam, so as to photograph any bubbles of vapour 9 dispersed in the liquid phase.

The electronic control unit 7 determines the vapour quality x of the cooling fluid based on the images acquired by the image acquisition device 41".

Specifically, the electronic control unit 7 calculates at successive time intervals the number of bubbles 9 and/or their size based on the images acquired by the image acquisition device 41" and calculates the vapour quality x based on the comparison of the values detected of the number of bubbles 9 and/or of the area occupied by the bubbles 9 based on the images acquired and values stored.

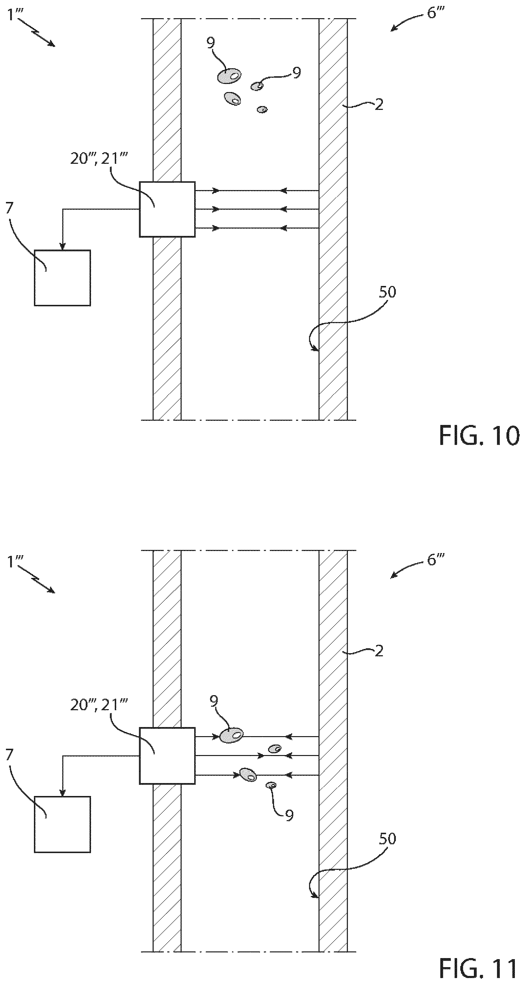

With reference to Figures 10 and 11, reference number 1‴ indicates a system according to a further example being not part of the invention. The system 1‴ is a heat exchanging system similar to the first heat exchanging system 1 and will be described below only as far as it differs from the latter; the same or equivalent parts of the heat exchanging systems 1, 1‴ will be distinguished, where possible, by the same reference numbers.

The heat exchanging system 1‴ differs from the first heat exchanging system 1 in that it comprises a device 6‴ in place of the device 6.

The device 6‴ comprises an ultrasound emitter 20‴ and an ultrasound receiver 21‴ directly facing the lumen of the section of circuit 2 and adjacent and/or contiguous and/or integrated and/or in contact with each other. Specifically, the ultrasound emitter 20‴ and the ultrasound receiver 21‴ are arranged on the same side of the section of the circuit 2 in relation to the flow of cooling fluid. In other words, unlike what happens with the ultrasound emitter 20 and the ultrasound receiver 21, between the ultrasound emitter 20''' and the ultrasound receiver 21‴ there is no section of the pipe transversal to the flow direction of the cooling fluid.

The ultrasound emitter 20‴ is adapted to emit a first ultrasonic signal and the ultrasound receiver 21‴ is adapted to generate a second signal associated with the ultrasounds received following the emission of the first ultrasonic signal and the reflection thereof against the walls 50 of the section of the circuit 2. Specifically, the ultrasound emitter 20‴ is adapted to emit the first ultrasonic signal so that this is reflected against the inner walls 50 of the section of the circuit 2 through the flow of cooling fluid that flows inside and reaches, at least in part, the ultrasound receiver 21‴ through the lumen of the section of the circuit 2, and, as a result, again through the flow of cooling fluid that flows inside.

The fact that the ultrasound emitter 20''' and the ultrasound receiver 21''' directly face the lumen of the section of the circuit 2 means that the first ultrasonic signal is emitted in the lumen of the pipe section of the circuit 2 in the absence of elements interposed between the ultrasound emitter 20‴ and the lumen and that the first signal, once reflected, reaches the ultrasound receiver 21‴ in the absence of elements interposed between the lumen and the ultrasound receiver 21‴.

For example, the second signal is a voltage that is variable over time and having an amplitude proportional to the quantity of reflected ultrasounds received by the ultrasound receiver 21‴ over time.

The second signal is related to the amplitude over time of the first ultrasonic signal, as a function of the attenuation that the latter undergoes during propagation through the lumen of the pipe of the circuit 2 and the reflection against the walls 50 of the section of the circuit 2.

The "walls" 50 of the section of circuit 2 means the inner walls of the pipe through which the flow of cooling fluid passes and arranged near the device 6'''. More specifically, the walls 50 against which the first ultrasonic signal is reflected are arranged at and/or near the ultrasound emitter 20‴ and the ultrasound receiver 21‴.

The operation of the device 6‴ is similar to that of the device 6 and the description thereof is omitted for brevity.

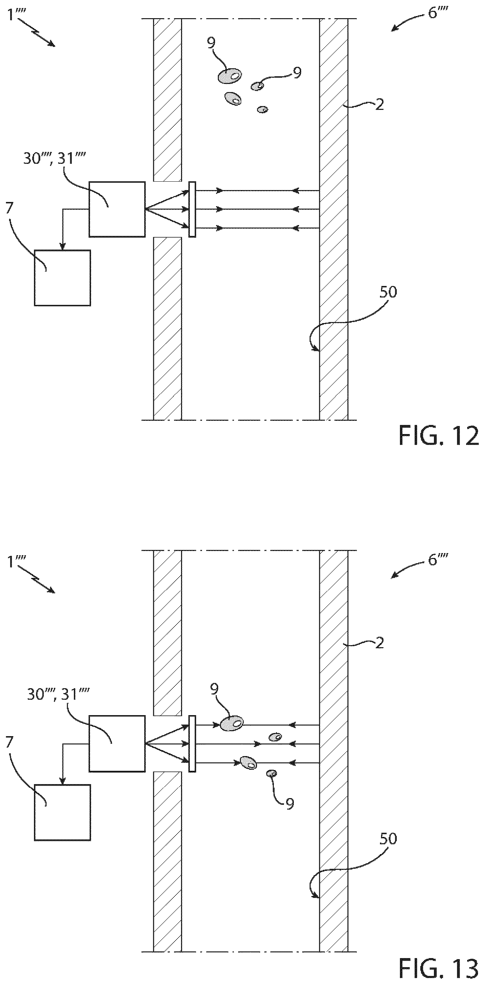

With reference to Figures 12 and 13, reference number 1ʺʺ indicates a further example being not part of the invention. The system 1ʺʺ is a heat exchanging system similar to the second heat exchanging system 1' and will be described below only as far as it differs from the latter; the same or equivalent parts of the heat exchanging systems 1', 1ʺʺ will be distinguished, where possible, by the same reference numbers.

The heat exchanging system 1ʺʺ differs from the second heat exchanging system 1' in that it comprises a device 6ʺʺ in place of the device 6'.

The device 6ʺʺ comprises a light emitter 30ʺʺ and a light receiver 31ʺʺ directly facing the lumen of the section of the circuit 2 and adjacent and/or contiguous and/or integrated and/or in contact with each other. Specifically, the light emitter 30ʺʺ and the ultrasound receiver 31ʺʺ are arranged on the same side of the section of the circuit 2 in relation to the flow of cooling fluid. In other words, unlike what happens with the light emitter 30' and the light receiver 31', between the light emitter 30ʺʺ and the light receiver 31ʺʺ no pipe section is interposed transversal to the flow direction of the cooling fluid.

The light emitter 30ʺʺ is adapted to emit a third luminous signal and the light receiver 31ʺʺ is adapted to generate a fourth signal associated with the light received following the emission of the third luminous signal and the reflection thereof against the walls 50 of the section of the circuit 2.

Specifically, the light emitter 30ʺʺ is adapted to emit the third luminous signal so that this is reflected against the inner walls 50 of the section of the circuit 2 through the flow of cooling fluid that flows inside and reaches at least in part the light receiver 31ʺʺ through the lumen of the section of the circuit 2, and, as a result, again through the flow of cooling fluid that flows inside.

The fact that the light emitter 30ʺʺ and the light receiver 31ʺʺ directly face the lumen of the section of the circuit 2 means that the first ultrasonic signal is emitted in the lumen of the pipe section of the circuit 2 in the absence of elements interposed between the light emitter 30ʺʺ and the lumen and that the third signal, once reflected, reaches the light receiver 31ʺʺ in the absence of elements interposed between the lumen and the light receiver 31ʺʺ.

For example, the fourth signal is a voltage that is variable over time and having an amplitude proportional to the quantity of reflected light received and/or captured by the light receiver 31ʺʺ over time. The fourth signal is related to the amplitude over time of the third luminous signal, as a function of the attenuation that the latter undergoes during propagation through the lumen of the pipe of the circuit 2 and the reflection against the walls 50 of the section of the circuit 2.

The operation of the device 6ʺʺ is similar to that of the device 6' and its description is omitted for brevity.

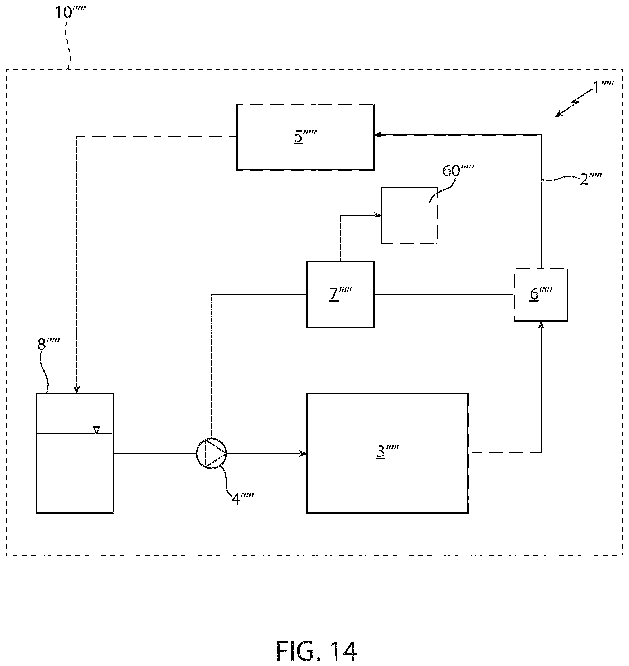

With reference to Figure 14, reference number 1‴ʺ indicates a system according to a sixth embodiment, which is not part of this invention.

The system 1ʺ‴ is a lubricating system or a lubricating-cooling system and comprises:
- a circuit 2‴ʺ adapted to be crossed by a lubricating fluid;
- a component 3‴ʺ, which is adapted to be lubricated by the lubricating fluid and/or to release heat to the lubricating fluid;
- a pump 4‴ʺ adapted to circulate the lubricating fluid inside the circuit 2ʺʺ; and
- a heat exchanger 5‴ʺ adapted to withdraw heat from the lubricating fluid.

Although, for brevity, only the verb "to lubricate" will be used below, any reference to lubrication must also be optionally understood as a combined reference to lubrication and cooling of the component 3‴ʺ.

The component 3‴ʺ to be lubricated is, for example, a thermal engine or electric motor or a transmission of the motor vehicle 10‴ʺ.

The heat exchanger 5ʺ‴ is arranged downstream of the component 3‴ʺ according to the flow direction of the cooling fluid.

In the embodiment illustrated, the heat exchanging system 1ʺ‴ also comprises a tank 8ʺ‴ adapted to contain the lubricating fluid and fluidically connected to the circuit 2‴ʺ.

Advantageously, the lubrication system 1‴ʺ comprises a device 6‴ʺ for determining a quantity y relating to the quantity of free air - i.e. in the form of bubbles, not dissolved in the lubricating fluid - transported by the flow of the lubricating fluid and an electronic control unit 7‴ʺ operationally connected to the device 6‴ʺ and to the pump 4‴ʺ; the electronic control unit 7‴ʺ is configured to control the pump 4‴ʺ as a function of the quantity y detected and/or determined by the device 6‴ʺ. For example, the quantity y is a percentage of free air in relation to a given quantity of lubricating fluid in which it is distributed in the form of bubbles.

In the embodiment illustrated, the device 6‴ʺ is located downstream of the component 3‴ʺ according to the flow direction of the cooling fluid inside the circuit 2‴ʺ. Specifically, the device 6‴ʺ is fluidically interposed between the component 3‴ʺ and the heat exchanger 5‴ʺ.

The electronic control unit 7‴ʺ is configured to make the pump 4''''' decrease the flow rate of the lubricating fluid and/or determine a decrease in the value of an operative parameter of the component 3‴ʺ, when the quantity y is greater than a threshold value ymax.

The electronic control unit 7‴ʺ is also configured to make the pump 4‴ʺ increase the flow rate of the lubricating fluid and/or increase the operative parameter of the component 3‴ʺ, when the quantity y detected and/or determined is less than a threshold value ymin. Specifically, the threshold value ymin is less than the threshold value ymax.

In detail, when the quantity y detected and/or determined is less than the threshold value ymin, the electronic control unit 7‴ʺ is configured to make the pump 4‴ʺ restore the flow rate of the lubricating fluid to a starting value and/or restore the operative parameter of the component 3‴ʺ to a starting value.

More specifically, the electronic control unit 7‴ʺ comprises a memory - known and not illustrated - adapted to store the numeric or percentage values of the threshold values ymin and ymax.

The operative parameter is associated with a kinetic quantity of the component 3‴ʺ and/or a force or a torque exchanged or transmitted by the component 3‴ʺ. For example, if the component 3‴ʺ is a thermal engine or electric motor, the operative parameter is the torque delivered by the engine or the rotation speed of the engine shaft. If the component 3‴ʺ is a transmission, the operative parameter is, for example, the torque delivered.

The vehicle 10‴ʺ preferably comprises a signalling device 60‴ʺ operationally connected to the control unit 7‴ʺ and adapted to emit an alarm signal, for example, a sound and/or light signal, if the lubricating fluid is of poor quality. Specifically, the electronic control unit 7‴ʺ is configured to make the signalling device 60‴ʺ send the user/s of the vehicle 10‴ʺ the alarm signal, when the quantity y is greater than the threshold value ymax.

The device 6‴ʺ is identical to the device 6, suitably calibrated so as to be adapted to determine the quantity y in place of the vapour quality x.

Specifically, the electronic control unit 7‴ʺ is configured to determine the quantity y based on the second signal. More specifically, the electronic control unit 7‴ʺ is configured to calculate the quantity y based on one or more statistical parameters detected based on the second signal, for example, peak-peak differences, standard deviation, and/or average value. Moreover, the electronic control unit 7‴ʺ is configured to store a value or range of values that the statistical parameters assume in a condition in which the flow of lubricating fluid is, in use, without free air, essentially without free air, or comprises a predetermined percentage of free air and to compare the value of the statistical parameters detected based on the second signal with the stored values. The electronic control unit 7‴ʺ is also configured to determine and/or calculate the value of the quantity y as a function of the difference between the stored values of statistical parameters and the values detected based on the second signal.

In general, when the flow of the lubricating fluid is without, or essentially without, free air, the first ultrasonic signal essentially propagates undisturbed through the flow. When there is free air in the flow, the first ultrasonic signal is at least partially intercepted by the air bubbles dispersed in the liquid and this causes greater attenuation thereof.

Alternatively, the device 6‴ʺ is identical to the device 6', suitably configured so as to determine the quantity y in place of the vapour quality x. Specifically, the electronic control unit 7‴ʺ is configured to determine the quantity y based on the fourth signal. The electronic control unit 7‴ʺ is configured to calculate the quantity y based on one or more statistical parameters detected based on the fourth signal, for example, peak-peak distances, standard deviation, and/or average value.

More specifically, the electronic control unit 7‴ʺ is configured to store a value or range of values that the statistical parameters assume in a condition in which the flow of the cooling fluid is without free air, essentially without free air, or comprises a predetermined percentage of free air and to compare the value of the statistical parameters detected based on the fourth signal with the stored values. The electronic control unit 7‴ʺ is also configured to calculate the value of the quantity y as a function of the difference between the stored values of the statistical parameters and values detected based on the fourth signal. In general, when the flow of the lubricating fluid is without, or essentially without, free air, the third ultrasonic signal essentially propagates undisturbed through the flow. When there is free air in the flow, the third ultrasonic signal is at least partially intercepted by the air bubbles dispersed in the lubricating fluid and this causes greater attenuation thereof.

Alternatively, the device 6‴ʺ is identical to the device 6'', suitably calibrated so as to be adapted to determine the quantity y in place of the vapour quality x. Specifically, the image acquisition device is adapted to acquire images of the section of the circuit 2‴ʺ, in order to detect any free air bubbles dispersed in the flow of lubricating fluid. The electronic control unit 7‴ʺ is configured to determine and/or calculate the quantity y based on the images acquired by the image acquisition device, for example by analysing the area of the surface engaged by the air bubbles on the pipe section acquired, through thresholding and weighing of the image in greyscale.

Alternatively, the device 6‴ʺ is identical to the device 6‴ or to the device 6ʺʺ suitably calibrated to determine the quantity y in place of the vapour quality x. For the description of the device 6‴ʺ when it is identical to the device 6‴ or the device 6ʺʺ, please refer to the description contained above of the device 6‴ and the device 6ʺʺ.

The operation of the lubrication system 1‴ʺ is described below.

In use, the pump 4‴ʺ circulates the cooling fluid inside the circuit 2‴ʺ in order to lubricate the component 3‴ʺ.

The device 6‴ʺ periodically determines the value of the quantity y of the lubricating fluid and the electronic control unit 7‴ʺ compares the value of the quantity y determined with the threshold values ymin and ymax.

If the value of the quantity y determined is greater than the threshold value ymax, the electronic control unit 7‴ʺ decreases the flow rate of lubricating fluid delivered by the pump 4‴ʺ and/or decreases the operative parameter of the component 3‴ʺ (for example, if the component 3‴ʺ is an engine, the rotation speed of the engine shaft is reduced) . At this point, the lubricating fluid is accumulated in the tank 8‴ʺ, where the free air transported here dissolves in the lubricating fluid or is returned in the engine intake line.

When the value of the quantity y determined has gone below the threshold value ymin, the electronic control unit 7‴ʺ restores the operation of the component 3‴ʺ and/or the flow rate of the pump 4‴ʺ.

From the above, the advantages of the system 1; 1'; 1"; 1‴; 1ʺʺ, and of the motor vehicle 10 according to the invention are clear.

In particular, since the heat exchanging system 1; 1'; 1"; 1‴; 1ʺʺ comprises the device 6; 6'; 6"; 6‴; 6ʺʺ for determining the vapour quality x of the cooling fluid, the reliability of the heat exchanging system 1; 1'; 1"; 1‴; 1ʺʺ is significantly increased in relation to the known biphasic heat exchanging system discussed in the introduction to this description. In fact, due to the fact that the vapour quality x is periodically detected, the flow rate of the pump 4 may be automatically adjusted in order to ensure the correct cooling of the component 3. This makes it possible to ensure efficient cooling of the component 3, including if there are anomalies or losses of cooling fluid from the circuit 2.

The device 6 is particularly advantageous, since it makes it possible to determine the vapour quality x or the quantity y efficiently and irrespective of how clean the circuit 2 and/or the cooling fluid are.

The device 6" is equally advantageous, since the images acquired during operation may be easily used for visual checks.

Finally, it is clear that changes and variations may be made to the system 1; 1' ; 1"; 1‴; 1ʺʺ and to the motor vehicle 10 according to the invention, which, in any case, do not depart from the scope of protection defined by the claims.

In particular, the heat exchanging system 1; 1'; 1''; 1‴; 1ʺʺ could comprise more than one component 3 to be cooled. Similarly, the heat exchanging system 1; 1'; 1"; 1‴; 1ʺʺ could comprise more than one pump 4 and/or heat exchanger 5.

The device 6; 6'; 6"; 6‴; 6ʺʺ could be arranged at the component 3 to be cooled. Specifically, the device 6; 6'; 6"; 6‴; 6ʺʺ could be adapted to detect and/or determine the vapour quality x of the cooling fluid while the latter removes heat from the component 3 to be cooled.

The heat exchanging system 1; 1'; 1"; 1‴; 1ʺʺ could also comprise more than one device 6 and/or more than one device 6' and/or more than one device 6" and/or more than one device 6‴ and/or more than one device 6ʺʺ. Each of these devices 6; 6'; 6"; 6‴; 6ʺʺ would be adapted to determine the vapour quality x of the cooling fluid at the respective, various sections of the circuit 2.

The device 6; 6‴ could comprise more than one ultrasound emitter 20; 20'' and/or more than one ultrasound receiver 21, 21'''. In addition, the device 6; 6‴ could comprise an electronic control unit other than the electronic control unit 7 and adapted to determine the vapour quality x based on the second signal.

The device 6; 6‴ could comprise more than one light emitter 30'; 30ʺʺ and/or more than one light receiver 31'; 31ʺʺ. In addition, the device 6'; 6ʺʺ could comprise an electronic control unit other than the electronic control unit 7 and adapted to determine the vapour quality x based on the fourth signal.

The device 6" could comprise more than one light emitter 40' and/or more than one image acquisition device 41". In addition, the device 6'' could comprise an electronic control unit other than the electronic control unit 7 and adapted to determine the vapour quality x based on the images acquired by the image acquisition device 41".

## Claims

1. A system (1") for a motor vehicle comprising:
- a circuit (2) adapted to be crossed, in use, by a cooling fluid;
- a pump (4) adapted to circulate, in use, said fluid within said circuit (2);
- at least one device (6'') adapted to determine a quantity (x) associated with the amount of a gaseous substance dispersed within the flow of said fluid, which flows, in use, within said circuit (2);
- an electronic control unit (7) operatively connected to said device (6") and said pump (4);
- at least one component (3) to be cooled down;
wherein said electronic control unit (7) is configured to control said pump (4) as a function of said quantity determined, in use, by said device (6");
wherein said component (3) to be cooled down is adapted to release heat, in use, to said cooling fluid;
**characterized in that** said quantity is the vapour quality (x) of said cooling fluid;
wherein said device (6") comprises at least one light emitter (40'') and at least one image acquisition device (41"), between whom a stretch of said circuit (2) is interposed;
said light emitter (40") being adapted to emit a light beam at the lumen of said stretch of said circuit (2) and said image acquisition device (41") being adapted to capture images of at least part of said stretch illuminated, in use, by said light beam;
said electronic control unit (7) being configured to determine said quantity (x) on the basis of the images captured by said image acquisition device (41").

2. The system according to claim 1, wherein said electronic control unit (7) is configured to command said pump (4) to increase the flow rate of said cooling fluid, when said vapour quality (x) detected and/or determined, in use, by said device (6") is greater than a first threshold value (xmax);
wherein said electronic control unit (7) is configured to command said pump (4) to decrease the flow rate of said cooling fluid, when said vapour quality (x) detected and/or determined, in use, by said device (6'') is lower than a second threshold value (xmin); said second threshold value (xmin) being lower than said first threshold value (xmax).

3. The system according to claim 1 or 2, wherein said at least one device (6'') is arranged downstream of said component (3) according to the flowing direction of said fluid within said circuit (2) and/or is arranged at said component (3).

4. The system according to any one of the foregoing claims, comprising a further device (6) adapted to detect and/or determine said quantity (x);
wherein said further device (6) comprises at least one ultrasound emitter (20) and at least one ultrasound receiver (21), between whom a stretch of said circuit (2) is interposed;
wherein said ultrasound emitter (20) is adapted to emit, in use, a first ultrasonic signal and said ultrasound receiver (21) is adapted to generate a second signal associated with the ultrasounds received, in use, following the emission of said first ultrasonic signal;
wherein said electronic control unit (7) is configured to determine, in use, said quantity (x) also on the basis of said second signal.

5. The system according to any one of claims 1 to 3, comprising a further device (6‴) adapted to detect and/or determine said quantity (x);
wherein said further device (6''') comprises at least one ultrasound emitter (20‴) and at least one ultrasound receiver (21") adjacent and/or contiguous and/or integrated and/or in contact with one another;
wherein said ultrasound emitter (20‴) is adapted to emit, in use, a first ultrasonic signal and said ultrasound receiver (21‴) is adapted to generate a second signal associated with the ultrasounds received, in use, following the emission of said first ultrasonic signal and the reflection thereof against the inner walls (50) of a stretch of said circuit (2);
wherein said electronic control unit (7) is configured to determine, in use, said quantity (x) also on the basis of said second signal.

6. The system according to any one of claims 1 to 3, comprising a further device (6') adapted to detect and/or determine said quantity (x);
wherein said further device (6') comprises at least one further light emitter (30') and at least one light receiver (31'), between whom a stretch of said circuit (2) is interposed;
wherein said further light emitter (30') is adapted to emit, in use, a third luminous signal and said light receiver (31') is adapted to generate a fourth signal associated with the light received, in use, following the emission of said third luminous signal;
wherein said electronic control unit (7) is configured to determine, in use, said quantity (x) also on the basis of said fourth signal.

7. The system according to any one of claims 1 to 3, comprising a further device (6ʺʺ) adapted to detect and/or determine said quantity (x);
wherein said further device (6ʺʺ) comprises at least one further light emitter (30ʺʺ) and at least one light receiver (31ʺʺ) adjacent and/or contiguous and/or integrated and/or in contact with one another;
wherein said further light emitter (30ʺʺ) is adapted to emit, in use, a third luminous signal and said light receiver (31ʺʺ) is adapted to generate a fourth signal associated with the light received, in use, following the emission of said third luminous signal and the reflection thereof against the inner walls (50) of a stretch of said circuit (2);
wherein said electronic control unit (7) is configured to determine, in use, said quantity (x) also on the basis of said fourth signal.

8. The system according to claim 6 or 7, wherein said further light emitter (30'; 3ʺʺ) comprises a laser and said light receiver (31'; 31ʺʺ) comprises a photodiode.

9. The system according to any one of claims 4 to 8, wherein said electronic control unit (7) is adapted to detect one or more statistical parameters on the basis of said second signal or said fourth signal;
said electronic control unit (7) being further adapted to store the value of said one or more statistical parameters associated with a condition wherein said cooling fluid is, in use, in the liquid state and/or the value of said one or more statistical parameters associated with a condition wherein said cooling fluid is in the biphasic liquid/vapour state;
said electronic control unit (7) being adapted to calculate said vapour quality (x) on the basis of a comparison between said one or more statistical parameters detected, in use, on the basis of said second signal or said fourth signal and said one or more stored statistical parameters.

10. A motor vehicle comprising a system (1") according to any one of the foregoing claims.

## Patentansprüche

1. System (1") für ein Kraftfahrzeug, umfassend:
- einen Kreislauf (2), der ausgelegt ist, um bei Betrieb von einem Kühlfluid durchströmt zu werden;
- eine Pumpe (4), die ausgelegt ist, um das Fluid bei Betrieb innerhalb des Kreislaufs (2) umzuwälzen;
- mindestens eine Vorrichtung (6"), die ausgelegt ist, um eine Größe (x) zu bestimmen, die mit der Menge einer gasförmigen Substanz verknüpft ist, die in der Strömung des Fluids dispergiert ist, das bei Betrieb innerhalb des Kreislaufs (2) strömt;
- eine elektronische Steuereinheit (7), die betriebswirksam mit der Vorrichtung (6") und der Pumpe (4) verbunden ist;
- mindestens eine zu kühlende Komponente (3),
wobei die elektronische Steuereinheit (7) konfiguriert, um die Pumpe (4) abhängig von der bei Betrieb durch die Vorrichtung (6") bestimmten Größe zu steuern,
wobei die zu kühlende Komponente (3) ausgelegt ist, um bei Betrieb Wärme an das Kühlfluid abzugeben,
**dadurch gekennzeichnet, dass** die Größe die Dampfqualität (x) des Kühlfluids ist,
wobei die Vorrichtung (6") mindestens einen Lichtsender (40") und mindestens eine Bilderfassungsvorrichtung (41") umfasst, zwischen denen ein Teilstück des Kreislaufs (2) eingesetzt ist,
wobei der Lichtsender (40") ausgelegt ist, um einen Lichtstrahl an dem Lumen des Teilstücks des Kreislaufs (2) auszusenden, und die Bilderfassungsvorrichtung (41") ausgelegt ist, um Bilder von mindestens einem Teil des bei Betrieb durch den Lichtstrahl beleuchteten Teilstücks aufzunehmen,
wobei die elektronische Steuereinheit (7) konfiguriert ist, um die Größe (x) basierend auf den durch die Bilderfassungsvorrichtung (41") aufgenommenen Bildern zu bestimmen.

2. System nach Anspruch 1, wobei die elektronische Steuereinheit (7) konfiguriert ist, um die Pumpe (4) anzuweisen, die Durchflussrate des Kühlfluids zu erhöhen, wenn die bei Betrieb durch die Vorrichtung (6") erkannte und/oder bestimmte Dampfqualität (x) größer als ein erster Schwellenwert (xmax) ist,
wobei die elektronische Steuereinheit (7) konfiguriert ist, um die Pumpe (4) anzuweisen, die Durchflussrate des Kühlfluids zu reduzieren, wenn die bei Betrieb durch die Vorrichtung (6") erkannte und/oder bestimmte Dampfqualität (x) niedriger als ein zweiter Schwellenwert (xmin) ist, wobei der zweite Schwellenwert niedriger als der erste Schwellenwert (xmax) ist.

3. System nach Anspruch 1 oder 2, wobei die mindestens eine Vorrichtung (6") gemäß der Strömungsrichtung des Fluids innerhalb des Kreislaufs (2) stromabwärts der Komponente (3) angeordnet ist und/oder an der Komponente (3) angeordnet ist.

4. System nach einem der vorhergehenden Ansprüche, umfassend eine weitere Vorrichtung (6), die ausgelegt ist, um die Größe (x) zu erkennen und/oder zu bestimmen,
wobei die weitere Vorrichtung (6) mindestens einen Ultraschallsender (20) und mindestens einen Ultraschallempfänger (21) umfasst, zwischen denen ein Teilstück des Kreislaufs (2) eingesetzt ist,
wobei der Ultraschallsender (20) ausgelegt ist, um bei Betrieb ein erstes Ultraschallsignal auszusenden, und der Ultraschallempfänger (21) ausgelegt ist, um bei Betrieb nach dem Aussenden des ersten Ultraschallsignals ein zweites Signal zu generieren, das mit dem empfangenen Ultraschall verknüpft ist,
wobei die elektronische Steuereinheit (7) konfiguriert ist, um die Größe (x) bei Betrieb auch basierend auf dem zweiten Signal zu bestimmen.

5. System nach einem der Ansprüche 1 bis 3, umfassend eine weitere Vorrichtung (6‴), die ausgelegt ist, um die Größe (x) zu erkennen und/oder zu bestimmen,
wobei die weitere Vorrichtung (6‴) mindestens einen Ultraschallsender (20‴) und mindestens einen Ultraschallempfänger (21") umfasst, die zueinander benachbart und/oder aneinander angrenzend und/oder miteinander integriert und/oder in Kontakt sind,
wobei der Ultraschallsender (20‴) ausgelegt ist, um bei Betrieb ein erstes Ultraschallsignal auszusenden, und der Ultraschallempfänger (21‴) ausgelegt ist, um bei Betrieb nach dem Aussenden des ersten Ultraschallsignals und dessen Reflexion gegen die Innenwände (50) eines Teilstücks des Kreislaufs (2) ein zweites Signal zu generieren, das mit dem empfangenen Ultraschall verknüpft ist,
wobei die elektronische Steuereinheit (7) konfiguriert ist, um die Größe (x) bei Betrieb auch basierend auf dem zweiten Signal zu bestimmen.

6. System nach einem der Ansprüche 1 bis 3, umfassend eine weitere Vorrichtung (6'), die ausgelegt ist, um die Größe (x) zu erkennen und/oder zu bestimmen,
wobei die weitere Vorrichtung (6') mindestens einen weiteren Lichtsender (30') und mindestens einen weiteren Lichtempfänger (31') umfasst, zwischen denen ein Teilstück des Kreislaufs (2) eingesetzt ist,
wobei der weitere Lichtsender (30') ausgelegt ist, um bei Betrieb ein drittes Leuchtsignal auszusenden, und der Lichtempfänger (31') ausgelegt ist, um bei Betrieb nach dem Aussenden des dritten Leuchtsignals ein viertes Signal zu generieren, das mit dem empfangenen Licht verknüpft ist,
wobei die elektronische Steuereinheit (7) konfiguriert ist, um die Größe (x) bei Betrieb auch basierend auf dem vierten Signal zu bestimmen.

7. System nach einem der Ansprüche 1 bis 3, umfassend eine weitere Vorrichtung (6ʺʺ), die ausgelegt ist, um die Größe (x) zu erkennen und/oder zu bestimmen,
wobei die weitere Vorrichtung (6ʺʺ) mindestens einen weiteren Lichtsender (30ʺʺ) und mindestens einen Lichtempfänger (31ʺʺ) umfasst, die zueinander benachbart und/oder aneinander angrenzend und/oder miteinander integriert und/oder in Kontakt sind,
wobei der weitere Lichtsender (30ʺʺ) ausgelegt ist, um bei Betrieb ein drittes Leuchtsignal auszusenden, und der Lichtempfänger (31ʺʺ) ausgelegt ist, um bei Betrieb nach dem Aussenden des dritten Leuchtsignals und dessen Reflexion gegen die Innenwände (50) eines Teilstücks des Kreislaufs (2) ein viertes Signal zu generieren, das mit dem empfangenen Licht verknüpft ist,
wobei die elektronische Steuereinheit (7) konfiguriert ist, um die Größe (x) bei Betrieb auch basierend auf dem vierten Signal zu bestimmen.

8. System nach Anspruch 6 oder 7, wobei der weitere Lichtsender (30'; 30ʺʺ) einen Laser umfasst und der Lichtempfänger (31'; 31ʺʺ) eine Fotodiode umfasst.

9. System nach einem der Ansprüche 4 bis 8, wobei die elektronische Steuereinheit (7) ausgelegt ist, um einen oder mehrere statistische Parameter basierend auf dem zweiten Signal oder dem vierten Signal zu erkennen,
wobei die elektronische Steuereinheit (7) ferner ausgelegt ist, um den Wert des einen oder der mehreren statistischen Parameter, die mit einem Zustand verknüpft sind, in dem sich das Kühlfluid bei Betrieb im flüssigen Zustand befindet, und/oder den Wert des einen oder der mehreren statistischen Parameter, die mit einem Zustand verknüpft sind, in dem sich das Kühlfluid im zweiphasigen Flüssigkeits-/Dampfstatus befindet, zu speichern,
wobei die elektronische Steuereinheit (7) ausgelegt ist, um die Dampfgröße (x) basierend auf einem Vergleich zwischen dem einen oder den mehreren bei Betrieb basierend auf dem zweiten Signal oder dem vierten Signal erkannten statistischen Parametern und dem einen oder den mehreren gespeicherten statistischen Parametern zu berechnen.

10. Kraftfahrzeug, umfassend ein System (1'') nach einem der vorhergehenden Ansprüche.

## Revendications

1. Système (1'') destiné à un véhicule automobile, comprenant :
- un circuit (2) adapté pour être traversé, en fonctionnement, par un fluide de refroidissement ;
- une pompe (4) adaptée pour faire circuler, en fonctionnement, ledit fluide à l'intérieur dudit circuit (2) ;
- au moins un dispositif (6'') adapté pour déterminer une grandeur (x) liée à la quantité d'une substance gazeuse dispersée dans le flux dudit fluide, qui s'écoule, en fonctionnement, à l'intérieur dudit circuit (2) ;
- une unité de commande électronique (7) reliée de manière opérationnelle audit dispositif (6'') et à ladite pompe (4) ;
- au moins un composant (3) à refroidir ;
dans lequel ladite unité de commande électronique (7) est configurée pour commander ladite pompe (4) en fonction de ladite quantité déterminée, en fonctionnement, par ledit dispositif (6'') ;
dans lequel ledit composant (3) à refroidir est adapté pour céder de la chaleur, en fonctionnement, audit fluide de refroidissement ;
**caractérisé en ce que** ladite quantité est la qualité de vapeur (x) dudit fluide de refroidissement ;
dans lequel ledit dispositif (6'') comprend au moins un émetteur de lumière (40'') et au moins un dispositif d'acquisition d'images (41''), entre lesquels est intercalé un tronçon dudit circuit (2) ;
ledit émetteur de lumière (40'') étant adapté pour émettre un faisceau lumineux au niveau de la lumière dudit tronçon dudit circuit (2) et ledit dispositif d'acquisition d'images (41'') étant adapté pour capturer des images d'au moins une partie dudit tronçon éclairé, en fonctionnement, par ledit faisceau lumineux ;
ladite unité de commande électronique (7) étant configurée pour déterminer ladite quantité (x) sur la base des images capturées par ledit dispositif d'acquisition d'images (41'')

2. Système selon la revendication 1, dans lequel ladite unité de commande électronique (7) est configurée pour commander ladite pompe (4) pour augmenter le débit dudit fluide de refroidissement, lorsque ladite qualité de vapeur (x) détectée et/ou déterminée, en fonctionnement, par ledit dispositif (6'') est supérieure à une première valeur seuil (xmax) ;
dans lequel ladite unité de commande électronique (7) est configurée pour commander ladite pompe (4) pour réduire le débit dudit fluide de refroidissement, lorsque ladite qualité de vapeur (x) détectée et/ou déterminée, en fonctionnement, par ledit dispositif (6''), est inférieure à une deuxième valeur seuil (xmin) ; ladite deuxième valeur seuil (xmin) étant inférieure à ladite première valeur seuil (xmax).

3. Système selon la revendication 1 ou 2, dans lequel ledit au moins un dispositif (6'') est disposé en aval dudit composant (3) suivant la direction d'écoulement dudit fluide à l'intérieur dudit circuit (2) et/ou est disposé au niveau dudit composant (3).

4. Système selon l'une quelconque des revendications précédentes, comprenant un dispositif supplémentaire (6) adapté pour détecter et/ou déterminer ladite quantité (x) ;
dans lequel ledit dispositif supplémentaire (6) comprend au moins un émetteur d'ultrasons (20) et au moins un récepteur d'ultrasons (21), entre lesquels est intercalé un tronçon dudit circuit (2) ;
dans lequel ledit émetteur d'ultrasons (20) est adapté pour émettre, en fonctionnement, un premier signal ultrasonore et ledit récepteur d'ultrasons (21) est adapté pour générer un deuxième signal associé aux ultrasons reçus, en fonctionnement, à la suite de l'émission dudit premier signal ultrasonore ;
dans lequel ladite unité de commande électronique (7) est configurée pour déterminer, en fonctionnement, ladite quantité (x) également sur la base dudit deuxième signal.

5. Système selon l'une quelconque des revendications 1 à 3, comprenant un dispositif supplémentaire (6‴) adapté pour détecter et/ou déterminer ladite quantité (x) ;
dans lequel ledit dispositif supplémentaire (6‴) comprend au moins un émetteur d'ultrasons (20‴) et au moins un récepteur d'ultrasons (21'') adjacents et/ou contigus et/ou intégrés et/ou en contact les uns avec les autres ;
dans lequel ledit émetteur d'ultrasons (20‴) est adapté pour émettre, en fonctionnement, un premier signal ultrasonore et ledit récepteur d'ultrasons (21‴) est adapté pour générer un deuxième signal associé aux ultrasons reçus, en fonctionnement, à la suite de l'émission dudit premier signal ultrasonore et de sa réflexion contre les parois internes (50) d'un tronçon dudit circuit (2) ;
dans lequel ladite unité de commande électronique (7) est configurée pour déterminer, en fonctionnement, ladite quantité (x) également sur la base dudit deuxième signal.

6. Système selon l'une quelconque des revendications 1 à 3, comprenant un dispositif supplémentaire (6') adapté pour détecter et/ou déterminer ladite quantité (x) ;
dans lequel ledit dispositif supplémentaire (6') comprend au moins un émetteur de lumière supplémentaire (30') et au moins un récepteur de lumière (31'), entre lesquels est interposé un tronçon dudit circuit (2) ;
dans lequel ledit émetteur de lumière supplémentaire (30') est adapté pour émettre, en fonctionnement, un troisième signal lumineux et ledit récepteur de lumière (31') est adapté pour générer un quatrième signal associé à la lumière reçue, en fonctionnement, à la suite de l'émission dudit troisième signal lumineux ;
dans lequel ladite unité de commande électronique (7) est configurée pour déterminer, en fonctionnement, ladite quantité (x) également sur la base dudit quatrième signal.

7. Système selon l'une quelconque des revendications 1 à 3, comprenant un dispositif supplémentaire (6ʺʺ) adapté pour détecter et/ou déterminer ladite quantité (x) ;
dans lequel ledit dispositif supplémentaire (6ʺʺ) comprend au moins un émetteur de lumière supplémentaire (30ʺʺ) et au moins un récepteur de lumière (31ʺʺ) adjacents et/ou contigus et/ou intégrés et/ou en contact les uns avec les autres ;
dans lequel ledit émetteur de lumière supplémentaire (30ʺʺ) est adapté pour émettre, en fonctionnement, un troisième signal lumineux et ledit récepteur de lumière (31ʺʺ) est adapté pour générer un quatrième signal associé à la lumière reçue, en fonctionnement, à la suite de l'émission dudit troisième signal lumineux et de sa réflexion contre les parois internes (50) d'un tronçon dudit circuit (2) ;
dans lequel ladite unité de commande électronique (7) est configurée pour déterminer, en fonctionnement, ladite quantité (x) également sur la base dudit quatrième signal.

8. Système selon la revendication 6 ou 7, dans lequel ledit émetteur de lumière supplémentaire (30' ; 30ʺʺ) comprend un laser et ledit récepteur de lumière (31' ; 31ʺʺ) comprend une photodiode.

9. Système selon l'une quelconque des revendications 4 à 8, dans lequel ladite unité de commande électronique (7) est adaptée pour détecter un ou plusieurs paramètres statistiques sur la base dudit deuxième signal ou dudit quatrième signal ;
ladite unité de commande électronique (7) étant en outre adaptée pour stocker la valeur dudit ou desdits paramètres statistiques associés à une condition dans laquelle ledit fluide de refroidissement se trouve, en fonctionnement, à l'état liquide et/ou la valeur dudit ou desdits paramètres statistiques associés à une condition dans laquelle ledit fluide de refroidissement se trouve à l'état biphasique liquide/vapeur ;
ladite unité de commande électronique (7) étant adaptée pour calculer ladite qualité de vapeur (x) sur la base d'une comparaison entre lesdits un ou plusieurs paramètres statistiques détectés, en fonctionnement, sur la base dudit deuxième signal ou dudit quatrième signal et desdits un ou plusieurs paramètres statistiques stockés.

10. Véhicule automobile comprenant un système (1'') selon l'une quelconque des revendications précédentes.
